# EUROPÄISCHE PATENTSCHRIFT

(11) **EP 3 079 963 B1**
(45) Veröffentlichungstag und Bekanntmachung des Hinweises auf die Patenterteilung: **22.08.2018**
(21) Anmeldenummer: 14808492.4
(22) Anmeldetag: 26.11.2014
(51) Int. Cl.: B62D 15/02, B60N 2/90, B60W 50/14, B60W 50/16, B60N 2/02, G05D 1/00, G05D 1/02

(54) **VERFAHREN ZUM AUTOMATISCHEN BETRIEB EINES FAHRZEUGES**
METHOD FOR THE AUTOMATIC OPERATION OF A VEHICLE
PROCÉDÉ PERMETTANT LE FONCTIONNEMENT AUTOMATIQUE D'UN VÉHICULE

(30) Priorität: 11.12.2013 DE 102013020933
(43) Veröffentlichungstag der Anmeldung: 19.10.2016
(73) Patentinhaber: Daimler AG, 70327 Stuttgart (DE)
(72) Erfinder: BELLEM, Hanna, 70199 Stuttgart (DE); KLECZKA, Michael, 70839 Gerlingen (DE); KUHN, Klaus-Peter, 73269 Hochdorf (DE)
(74) Vertreter: JENSEN & SON
(86) Internationale Anmeldenummer: PCT/EP2014/003157
(87) Internationale Veröffentlichungsnummer: WO 2015/086112

(56) Entgegenhaltungen:
- EP-A1- 2 540 560
- WO-A1-2015/055297
- DE-A1- 19 919 278
- DE-A1-102005 058 809
- DE-A1-102007 018 665
- DE-A1-102009 058 524
- DE-A1-102010 048 822
- DE-A1-102011 121 948
- US-B1- 8 346 426
- US-B1- 8 473 144

## Beschreibung

Die Erfindung betrifft ein Verfahren zum automatischen Betrieb eines Fahrzeuges in einem mittels eines Fahrerassistenzsystems keine Nutzeraktion erfordernden autonomen Fahrbetrieb. Ein derartiges Verfahren zum automatischen Betrieb eines Fahrzeuges ist aus dem gattungsbildenden Dokument DE 10 2011 121 948 A1 bekannt. Aus der DE 10 2006 057 842 A1 ist ein Verfahren zur Unterstützung des Fahrers eines Fahrzeuges bei der Querführung des Fahrzeuges und ein Fahrerassistenzsystem zur Durchführung des Verfahrens bekannt. Das Verfahren sieht vor, dass die Umgebung des Fahrzeuges erfasst wird, um Objekte in der Umgebung des Fahrzeuges und/oder den Verlauf einer vom Fahrzeug befahrenen Fahrspur zu erkennen. Ein Querführungssystemeingriff zur Erzeugung eines kurskorrigierenden Systemgiermomentes oder einer kurskorrigierenden Systemgierrate wird ausgelöst, wenn die Gefahr besteht, dass das Fahrzeug mit einem der erkannten Objekte kollidieren könnte oder die erkannte Fahrspur verlassen könnte. Der Fahrer kann den Querführungssystemeingriff durch eine Betätigung des Lenkrades des Fahrzeuges, des Fahrpedals des Fahrzeuges und/oder des Bremspedal des Fahrzeuges unterbrechen, wenn das Ausmaß der jeweiligen Betätigung von einem der jeweiligen Betätigung zugeordneten Betätigungsreferenzwert betragsmäßig um mehr als ein vorgegebenes Toleranzmaß abweicht. Das Verfahren wird in einem Fahrerassistenzsystem eines Fahrzeuges eingesetzt, um dem Fahrer die Übernahme der Kontrolle über die Querführung des Fahrzeuges nach einer systemseitigen Auslösung des Querführungssystemeingriffes zu ermöglichen.
Darüber hinaus sind in der DE 10 2009 048 954 A1 ein Verfahren und eine Vorrichtung zum automatischen Betreiben eines Fahrzeuges in einem keine Nutzeraktion erfordernden autonomen Fahrbetrieb beschrieben. Das Verfahren weist ein Erfassen einer vorliegenden Verkehrssituation, ein Prüfen, ob die Verkehrssituation ein erstes Kriterium erfüllt und ein Sperren einer Funktionalität auf, die einem Fahrer während des autonomen Fahrbetriebes eine Nebentätigkeit anbietet, die sich nicht auf einen Fahrbetrieb des Fahrzeuges bezieht, falls das erste Kriterium erfüllt ist.

Der Erfindung liegt die Aufgabe zugrunde, ein gegenüber dem Stand der Technik verbessertes Verfahren zum automatischen Betrieb eines Fahrzeuges in einem mittels eines Fahrerassistenzsystems keine Nutzeraktion erfordernden autonomen Fahrbetrieb anzugeben.

Die Aufgabe wird erfindungsgemäß durch die in Anspruch 1 angegebenen Merkmale gelöst.

Vorteilhafte Ausgestaltungen der Erfindung sind Gegenstand der Unteransprüche.

Ein Verfahren zum automatischen Betrieb eines Fahrzeuges in einem mittels eines Fahrerassistenzsystems keine Nutzeraktion erfordernden autonomen Fahrbetrieb sieht erfindungsgemäß vor, dass ein Fahrer des Fahrzeuges über einen bevorstehenden automatischen Eingriff des Fahrerassistenzsystems in eine Längs- und/oder Querdynamik im autonomen Fahrbetrieb mittels einer automatischen Ausgabe eines Hinweises vorab informiert wird.

Mittels der automatischen Ausgabe des Hinweises wird der Fahrer des autonom fahrenden Fahrzeuges über den bevorstehenden automatischen Eingriff des Fahrerassistenzsystems informiert, so dass eine Akzeptanz des Fahrers gegenüber dem autonomen Fahrbetrieb erhöht ist. Der Fahrer wird mittels des Hinweises darüber in Kenntnis gesetzt, dass das Fahrerassistenzsystem über Informationen zukünftiger Begebenheiten das Fahrzeug und eine Fahrstrecke betreffend verfügt. Dadurch wird dem Fahrer des Fahrzeuges ein entspanntes und stressfreies Fahren im automatisierten, d. h. im autonomen Fahrbetrieb des Fahrzeuges ermöglicht.

Eine Eingewöhnungsphase des Fahrers in Bezug auf den aktivierbaren autonomen Fahrbetrieb des Fahrzeuges wird mittels der automatischen Ausgabe des Hinweises einfacher und zeitlich kürzer, wodurch zukünftige Fahrten im autonomen Fahrbetrieb für den Fahrer des Fahrzeuges entspannter werden. Dadurch wiederum wird die Akzeptanz, ein Nutzungsgrad des Fahrerassistenzsystems und somit auch der Sicherheits- und Komfortgewinn im autonomen Fahrbetriebes erhöht. Erfindungsgemäß wird der Hinweis zu einem vorgegebenen Zeitpunkt vor dem automatischen Eingriff in die Längs- und/oder Querdynamik ausgegeben, so dass der Fahrer des Fahrzeuges frühzeitig informiert wird, dass eine vorausliegende Verkehrssituation, beispielsweise eine bevorstehende Kurvenfahrt, von entsprechenden Komponenten des Fahrerassistenzsystems erkannt wurde. Erfindungsgemäß wird der Hinweis über den bevorstehenden automatischen Eingriff haptisch ausgegeben, wodurch das Risiko einer kognitiven Reizüberflutung des Fahrers des Fahrzeuges aufgrund einer optischen und/oder akustischen Ausgabe, insbesondere Blinken und/oder Piepen, zumindest verringert werden kann. Mit anderen Worten, wird der Fahrer mittels des haptischen Hinweises über einen bevorstehenden Eingriff durch das Fahrerassistenzsystem ohne intrusive, störende akustische Signale und potentiell übersehbare optische Signale informiert, wodurch ein Beitrag zur Erhöhung des Komforts und zur Entlastung des Fahrers geleistet wird.
In einer möglichen Ausführung wird als Hinweis für eine vorausliegende Kurve und einen dadurch bedingten Eingriff des Fahrerassistenzsystems ein aufblasbares Seitenpolster eines fahrdynamischen Fahrzeugsitzes automatisch mit einem Gas oder Fluid befüllt. Der Fahrer wird durch das befüllte Seitenpolster über die bevorstehende Kurvenfahrt informiert, wodurch der Fahrer gleichzeitig darüber in Kenntnis gesetzt wird, dass das Fahrerassistenzsystem die Fahraufgabe des Durchfahrens der Kurve übernimmt. Durch das automatische Befüllen des Seitenpolsters vor der Kurvenfahrt wird der Fahrer insbesondere automatisch darüber informiert, welche Bewegung das Fahrzeug in naher Zukunft durchführen wird.
Alternativ oder zusätzlich zum Befüllen des Seitenpolsters wird als Hinweis für die vorausliegende Kurve und den dadurch bedingten Eingriff des Fahrerassistenzsystems automatisch eine Querneigung einer Fahrzeugkarosserie verändert. Insbesondere wird die Querneigung der Fahrzeugkarosserie derart verändert, als wenn das Fahrzeug eine verhältnismäßig leichte Steilkurve durchfahren würde. Der Fahrer des Fahrzeuges nimmt an der Querneigung der Fahrzeugkarosserie teil, wodurch der Fahrer auch hierdurch darüber in Kenntnis gesetzt wird, welche Bewegung das Fahrzeug demnächst automatisch durchführt.

Wiederum alternativ oder zusätzlich kann vorgesehen sein, dass der Hinweis für die vorausliegende Kurve und den dadurch bedingten Eingriff des Fahrerassistenzsystems automatisch durch Veränderung einer Querneigung des Fahrzeugsitzes ausgegeben wird. Dabei wird der Fahrzeugsitz relativ leicht seitlich gekippt, wobei der Fahrzeugsitz vorzugsweise entsprechend einer Bewegung des Fahrers in dem Fahrzeugsitz bei der Kurvenfahrt seitlich gekippt wird.
Den Hinweis für die vorausliegende Kurve und den dadurch bedingten Eingriff des Fahrerassistenzsystems mittels einer automatischen Veränderung einer Form eines Lenkrades auszugeben, stellt eine weitere oder zusätzliche Alternative als Hinweis zur Übernahme der Fahraufgabe durch das Fahrerassistenzsystem dar. Auch hierdurch wird dem Fahrer angezeigt, dass das Fahrzeug die Kurve im autonomen Fahrbetrieb durchfährt, so dass der Fahrer nicht zu einem Handeln, insbesondere zu einem Lenkeingriff, gezwungen ist.

Denkbar ist auch, dass der Hinweis auf die vorausliegende Kurve, besonders bevorzugt zusätzlich, in einem Anzeigebereich einer Instrumententafel und/oder in einem Anzeigebereich einer Blickfeldanzeige optisch ausgegeben wird. Dabei kann ein dem Fahrzeug vorausliegender Fahrspurverlauf angezeigt werden, so dass der Fahrer des Fahrzeuges sieht, dass dem Fahrzeug eine Kurvenfahrt bevorsteht, die das Fahrerassistenzsystem mit autonomem Fahrbetrieb durchfährt.

Vorteilhaft wird anhand erfasster Signale einer Umgebungssensorik, anhand erfasster Daten einer digitalen Karte und/oder eines satellitengestützten Navigationssystem und/oder anhand ermittelter Informationen einer Fahrzeug-zu-Fahrzeug-Kommunikation und/oder anhand ermittelter Informationen einer Fahrzeug-zu-Infrastruktur-Kommunikation eine zu erwartende Fahrtrajektorie des Fahrzeuges ermittelt. Anhand dieser ermittelten Fahrtrajektorie kann eine zu erwartende Querbeschleunigung bestimmt werden.

Ausführungsbeispiele der Erfindung werden im Folgenden anhand einer Zeichnung näher erläutert.

Dabei zeigt die:

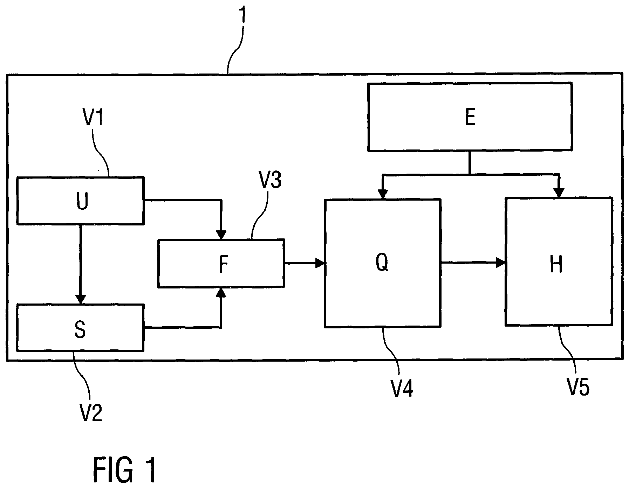

- Fig. 1: schematisch ein Blockschaltbild zur Durchführung eines Verfahrens zum automatischen Betrieb eines Fahrzeuges in einem keine Nutzeraktion erfordernden autonomen Fahrbetrieb.

In der einzigen Figur ist ein Blockschaltbild zur Durchführung eines Verfahrens zum automatischen Betrieb eines Fahrzeuges 1 mittels eines Fahrerassistenzsystems, wobei das Fahrzeug 1 autonom betrieben wird.

Das Fahrzeug 1 verfügt über eine Umgebungssensorik, die eine Anzahl von im und/oder am Fahrzeug 1 angeordneten Erfassungseinheiten umfasst. Mittels der Erfassungseinheiten, von denen zumindest eine als eine Bilderfassungseinheit in Form einer Kamera ausgeführt ist, wird eine Umgebung des Fahrzeuges 1 und sich in dieser befindende Objekte erfasst. Weiterhin verfügt das Fahrzeug 1 über eine Fahrzeug-zu-Fahrzeug-Kommunikation, eine Fahrzeug-zu-Infrastruktur-Kommunikation, über eine digitale Karte und/oder ein satellitengestütztes Navigationssystem.

Des Weiteren umfasst das Fahrzeug ein Fahrerassistenzsystem, mittels dessen es möglich ist, das Fahrzeug 1 im autonomen Fahrbetrieb zu bewegen, ohne dass ein Fahrer eine Nutzeraktion ausführt. Der Fahrer kann den autonomen Fahrbetrieb des Fahrerassistenzsystems durch Eingreifen in Lenk- und/oder Beschleunigungsfunktionen, bspw. durch Betätigen eines Lenkrads, eines Fahrpedals oder eines Bremspedals, deaktivieren oder überstimmen.

Zur Durchführung des autonomen Fahrbetriebes wird anhand der erfassten Signale der Umgebungssensorik und/oder anhand ermittelter Daten der digitalen Karte und/oder anhand der ermittelten Informationen der Fahrzeug-zu-Fahrzeug-Kommunikation und/oder der Fahrzeug-zu-Infrastruktur-Kommunikation wird in einem Verfahrensschritt V1 eine Umgebungserfassung U durchgeführt. Durch ermittelte Informationen der Umgebungserfassung U erfolgt in einem nächsten Verfahrensschritt V2 eine Situationsanalyse S, innerhalb welcher die Informationen der Umgebungserfassung U ausgewertet werden. Anhand der vorliegenden Informationen der Umgebungserfassung U und der ausgewerteten Informationen der Situationsanalyse S wird in einem weiteren Verfahrensschritt V3 eine zu erwartende Fahrtrajektorie F des Fahrzeuges 1 ermittelt.

Im autonomen, d. h. im teil- oder vollautomatisierten Fahrbetrieb, d. h. bei aktiviertem Fahrerassistenzsystem, führt der Fahrer keine zum Fahrbetrieb erforderlicher Funktion aus, so dass der Fahrer in Bezug auf den Fahrbetrieb eine passive Rolle einnimmt. Je nach Automatisierungsgrad des Fahrerassistenzsystems verfolgt der Fahrer des Fahrzeuges 1 die mittels des Fahrerassistenzsystems durchgeführten Aktionen oder beschäftigt sich ungeachtet einer Fahraufgabe mit anderem.

Verfolgt der Fahrer die mittels des Fahrerassistenzsystems automatisch eingeleiteten Aktionen, so wartet der Fahrer üblicherweise ab bis eine automatisierte Regelaktion des Fahrerassistenzsystems durch eine Bewegung des Fahrzeuges 1 tatsächlich und für den Fahrer merkbar eintritt. Dies kann dazu führen, dass der passive aber vorausschauende Fahrer jeder Aktion des Fahrzeuges 1 durch das Fahrerassistenzsystem in höchster Erwartung entgegensieht. Dieser nächsten Aktion des Fahrerassistenzsystems sieht der Fahrer mit höchster Erwartung entgegen, da der Fahrer bis zum Eintritt der Aktion nicht weiß, ob das Fahrerassistenzsystem die Situation genauso erfasst hat und dementsprechend agieren wird.

Bei einer Längsregelung des Fahrzeuges 1 im autonomen oder teilautonomen Fahrbetrieb wird dem Fahrer durch eine Gaswegnahme, beispielsweise aufgrund einer Kurve, eine anstehende Regelaktion frühzeitig signalisiert.

Ist der Fahrer des Fahrzeuges 1 aufgrund fehlender Erfahrung nicht ausreichend vertraut mit dem Fahrerassistenzsystem und das Fahren des Fahrzeuges 1 im autonomen Fahrbetrieb wird von dem Fahrer als nicht entlastend empfunden, kann aufgrund dessen eine Akzeptanz gegenüber dem Fahrerassistenzsystem mangelhaft sein.

Zur Erhöhung der Akzeptanz des Fahrers gegenüber dem Fahrerassistenzsystem und zur Steigerung eines Komforts für den Fahrer beim autonomen Fahrbetrieb des Fahrzeuges 1 ist vorgesehen, den Fahrer über einen bevorstehenden automatischen Eingriff des Fahrerassistenzsystems zu informieren. Dazu wird eine vorgegebene Zeitdauer vor einem Eintritt eines Eingriffes des Fahrerassistenzsystems in eine Längs- und/oder Querdynamik Q des Fahrzeuges 1 ein Hinweis H an den Fahrer des Fahrzeuges 1 ausgegeben.

Um das Risiko einer Reizüberflutung des Fahrers des Fahrzeuges 1 durch eine Ausgabe von akustischen und/oder optischen Signalen, die als lästig und/oder störend empfunden werden können, im Wesentlichen ausschließen zu können, wird der Hinweis H haptisch an den Fahrer ausgegeben.

Insbesondere bei der Möglichkeit ein Durchfahren einer Kurve oder ein Umfahren eines Hindernisses im autonomen Fahrbetrieb durchzuführen, ohne eine momentane Fahrgeschwindigkeit des Fahrzeuges 1 zu reduzieren, wird der haptische Hinweis H an den Fahrer des Fahrzeuges 1 ausgegeben.

Anhand der ermittelten Fahrtrajektorie F des Fahrzeuges 1 durch die Umgebungserfassung U und die Situationsanalyse S wird in einem darauffolgenden Verfahrensschritt V4 eine zu erwartende Querdynamik Q des Fahrzeuges 1 zu einem von der momentanen Fahrgeschwindigkeit abhängigen Zeitpunkt ermittelt.

Der Zeitpunkt des Eingriffes des Fahrerassistenzsystems in die Querdynamik Q des Fahrzeuges 1 ist ermittelt, so dass in einem nächsten Verfahrensschritt V5 vorgesehen ist, den haptischen Hinweis H auf den bevorstehenden Eingriff auszugeben.

Sofern das Fahrzeug 1 über einen fahrdynamischen Fahrzeugsitz verfügt, ist vorgesehen, dass ein mit einem Gas oder Fluid befüllbares Sitzpolster angesteuert und automatisch befüllt wird, bevor der Eingriff in die Querdynamik Q des Fahrzeuges 1 erfolgt.

Durch das Befüllen des Sitzpolsters als haptischer Hinweis H bezüglich der bevorstehenden Kurvenfahrt, die im autonomen Fahrbetrieb durchgeführt wird, wird der Fahrer darüber in Kenntnis gesetzt, welche Bewegung das Fahrzeug 1 nach der vorgegebenen Zeitdauer durchführen wird. Somit weiß der Fahrer, dass das Fahrerassistenzsystem die Fahraufgabe zum Durchfahren der Kurve oder zum Umfahren des Hindernisses übernimmt und der Fahrer nicht eingreifen muss.

Alternativ oder zusätzlich ist vorgesehen, dass sich die Fahrzeugkarosserie querneigt, als wenn das Fahrzeug 1 eine verhältnismäßig leichte Steilkurve durchfahren würde, um den Fahrer des Fahrzeuges 1 haptisch darauf hinzuweisen, dass die Kurve im autonomen Fahrbetrieb durchfahren wird.

Zudem ist alternativ oder zusätzlich vorgesehen, dass sich der Fahrzeugsitz querneigt, also seitlich kippt und/oder dass sich die Form eines Lenkrades des Fahrzeuges 1 ändert, sofern erfasst wird, dass sich die Hände des Fahrers am Lenkrad befinden.

Weiterhin kann dem Fahrer des Fahrzeuges 1 bevorzugt zusätzlich zu dem haptischen Hinweis H ein optischer Hinweis H ausgegeben werden. Dabei kann die Ausgabe des optischen Hinweises H in einem Anzeigebereich einer Instrumententafel des Fahrzeuges 1 und/oder in einem Anzeigebereich einer Blickfeldanzeige, dem sogenannten Head-up-Display, erfolgen.

Insbesondere wird der haptische Hinweis H und/oder der optische Hinweis H beispielsweise zwischen einer Sekunde und sechs Sekunden als vorgegebene Zeitdauer vor dem Zeitpunkt des Eingriffes des Fahrerassistenzsystems haptisch ausgegeben. Dabei können eine Intensität der Ausgabe des Hinweises H oder der Hinweise H sowie die Zeitdauer, in welcher die Ausgabe vor dem Eingriff erfolgen soll, von dem Fahrer des Fahrzeuges 1 durch manuelle Eingabe E verändert werden kann.

Ist vorgesehen, dem Fahrer des Fahrzeuges 1 die Fahraufgabe wieder zu übergeben, da beispielsweise ein im autonomen Fahrbetrieb befahrbares Teilstück einer Autobahn endet oder weil beim Staufolgefahren eine maximale Fahrgeschwindigkeit erreicht ist, wird der Fahrer mittels optischer und akustischer Signale dazu aufgefordert.

## Patentansprüche

1. Verfahren zum automatischen Betrieb eines Fahrzeuges (1) in einem mittels eines Fahrerassistenzsystems keine Nutzeraktion erfordernden autonomen Fahrbetrieb, wobei ein Fahrer des Fahrzeuges (1) über einen bevorstehenden automatischen Eingriff des Fahrerassistenzsystems in eine Längs- und/oder Querdynamik (Q) im autonomen Fahrbetrieb mittels einer automatischen Ausgabe eines Hinweises (H) informiert wird, **dadurch gekennzeichnet, dass**
der Hinweis (H) haptisch ausgegeben wird und der Hinweis (H) zu einem vorgegebenen Zeitpunkt vor dem automatischen Eingriff in die Längs- und/oder Querdynamik (Q) ausgegeben wird.

2. Verfahren nach einem der vorhergehenden Ansprüche,
**dadurch gekennzeichnet, dass**
als Hinweis (H) für eine vorausliegende Kurve und einen dadurch bedingten Eingriff des Fahrerassistenzsystems ein aufblasbares Seitenpolster eines fahrdynamischen Fahrzeugsitzes automatisch mit einem Gas oder Fluid befüllt wird.

3. Verfahren nach einem der vorhergehenden Ansprüche,
**dadurch gekennzeichnet, dass**
als Hinweis (H) für die vorausliegende Kurve und den dadurch bedingten Eingriff des Fahrerassistenzsystems automatisch eine Querneigung einer Fahrzeugkarosserie verändert wird.

4. Verfahren nach Anspruch 2 oder 3,
**dadurch gekennzeichnet, dass**
als Hinweis (H) für die vorausliegende Kurve und den dadurch bedingten Eingriff des Fahrerassistenzsystems automatisch eine Querneigung eines Fahrzeugsitzes verändert wird.

5. Verfahren nach einem der vorhergehenden Ansprüche,
**dadurch gekennzeichnet, dass**
als Hinweis (H) für die vorausliegende Kurve und den dadurch bedingten Eingriff des Fahrerassistenzsystems automatisch eine Form eines Lenkrades verändert wird.

6. Verfahren nach einem der vorhergehenden Ansprüche,
**dadurch gekennzeichnet, dass**
der Hinweis (H) auf die vorausliegende Kurve in einem Anzeigebereich einer Instrumententafel und/oder in einem Anzeigebereich einer Blickfeldanzeige optisch ausgegeben wird.

7. Verfahren nach einem der vorhergehenden Ansprüche,
**dadurch gekennzeichnet, dass**
anhand erfasster Signale einer Umgebungssensorik, anhand erfasster Daten einer digitalen Karte und/oder eines satellitengestützten Navigationssystem und/oder anhand ermittelter Informationen einer Fahrzeug-zu-Fahrzeug-Kommunikation und/oder anhand ermittelter Informationen einer Fahrzeug-zu-Infrastruktur-Kommunikation eine zu erwartende Fahrtrajektorie (F) des Fahrzeuges (1) ermittelt wird.

8. Verfahren nach einem der vorherigen Ansprüche,
**dadurch gekennzeichnet, dass**
der autonome Fahrbetrieb durch ein Eingreifen des Fahrers in Lenk- und/oder Beschleunigungsfunktionen des Fahrerassistenzsystems deaktiviert oder überstimmt wird.

## Claims

1. Method for the automatic operation of a vehicle (1) in an autonomous driving mode not requiring any user action by means of a driver assistance system, wherein the driver of the vehicle (1) is informed about an imminent automatic intervention of the driver assistance system into a longitudinal and/or transverse dynamic (Q) in the autonomous driving mode by means of an automatic output of a hint (H),
**characterised in that**
the hint (H) is output haptically and the hint (H) is output at a preset point in time before the automatic intervention into the longitudinal and/or transverse dynamic (Q).

2. Method according to any of the preceding claims,
**characterised in that**
as a hint (H) for an imminent bend and an intervention of the driver assistance system contingent thereto, an inflatable side cushion of a drive-dynamic vehicle seat is automatically filled with a gas or a fluid.

3. Method according to any of the preceding claims,
**characterised in that**
as a hint (H) for the imminent bend and the intervention of the driver assistance system contingent thereto, a transverse inclination of a vehicle body is changed automatically.

4. Method according to claim 2 or 3,
**characterised in that**
as a hint (H) for the imminent bend and the intervention of the driver assistance system contingent thereto, a transverse inclination of a vehicle seat is changed automatically.

5. Method according to any of the preceding claims,
**characterised in that**
as a hint (H) for the imminent bend and the intervention of the driver assistance system contingent thereto, a shape of a steering wheel is changed automatically.

6. Method according to any of the preceding claims,
**characterised in that**
the hint (H) for the imminent bend is output optically in a display area of an instrument panel and/or in a display area of a vision field display.

7. Method according to any of the preceding claims,
**characterised in that**
an expected driving trajectory (F) of the vehicle (1) is determined from detected signals of an environment sensor system, from recorded data of a digital map and/or a satellite-supported navigation system and/or from information gathered from a vehicle-to-vehicle communication and/or from information gathered from a vehicle-to-infrastructure communication.

8. Method according to any of the preceding claims,
**characterised in that**
the autonomous driving mode is deactivated by an intervention of the driver into steering and/or acceleration functions of the driver assistance system.

## Revendications

1. Procédé de fonctionnement automatique d'un véhicule automobile (1) dans un mode de conduite autonome exigeant aucune action d'utilisateur au moyen d'un système d'aide à la conduite, un conducteur du véhicule (1) étant informé sur une intervention automatique imminente du système d'aide à la conduite dans une dynamique transversale et/ou longitudinale (Q) en mode de conduite autonome au moyen d'une sortie automatique d'une indication (H), **caractérisé en ce que** l'indication (H) est transmise de manière haptique et l'indication (H) est transmise à un moment prédéfini avant l'intervention dans la dynamique transversale et/ou longitudinale (Q).

2. Procédé selon l'une quelconque des revendications précédentes, **caractérisé en ce qu'**en tant qu'indication (H) pour une courbe suivante et une intervention ainsi liée du système d'aide à la conduite un coussin latéral gonflable d'un siège de conducteur dynamique est rempli automatiquement de gaz ou d'un fluide.

3. Procédé selon l'une quelconque des revendications précédentes, **caractérisé en ce qu'**en tant qu'indication (H) pour la courbe suivante et l'intervention liée à cette dernière du système d'aide à la conduite, une inclinaison transversale d'une carrosserie de véhicule est modifiée automatiquement.

4. Procédé selon la revendication 2 ou la revendication 3, **caractérisé en ce qu'**en tant qu'indication (H) pour la courbe suivante et l'intervention liée à cette dernière du système d'aide à la conduite une inclinaison transversale d'un siège de véhicule est modifiée automatiquement.

5. Procédé selon l'une des revendications précédentes, **caractérisé en ce qu'**en tant qu'indication (H) pour une courbe suivante et l'intervention liée à cette dernière du système d'aide à la conduite, une forme d'un volant de direction est automatiquement modifié.

6. Procédé selon l'une des revendications précédentes, **caractérisé en ce que** l'indication (H) d'une courbe suivante est transmise optiquement dans une zone d'affichage d'un tableau de bord et/ou dans une zone d'un affichage tête haute.

7. Procédé selon l'une quelconque des revendications précédentes, **caractérisé en ce qu'**au moyen de signaux d'un système de capteurs d'environnement enregistrés, au moyen de données enregistrées d'une carte numérique et/ou d'un système de navigation par satellite et/ou au moyen d'informations déterminées d'une communication de véhicule à véhicule et/ou au moyen d'informations déterminées d'une communication de véhicule à infrastructure est déterminée une trajectoire attendue (F) du véhicule automobile (1).

8. Procédé selon l'une quelconque des revendications précédentes, **caractérisé en ce que** le mode de conduite autonome est désactivé ou rejeté par une intervention du conducteur au niveau des fonctions d'accélération et/ou de direction du système d'aide à la conduite.
